# EUROPEAN PATENT SPECIFICATION

(11) **EP 1 645 574 B1**
(45) Date of publication and mention of the grant of the patent: **13.05.2009**
(21) Application number: 03739979.7
(22) Date of filing: 01.07.2003
(51) Int. Cl.: C08F 218/08, C08F 6/00, C08F 8/12, C08F 216/06, C08J 11/02

(54) **THE PROCESS FOR CONTINUOUSLY PRODUCING ETHYLENE-VINYL ACETATE COPOLYMER AND REACTION SYSTEM**
VERFAHREN ZUR KONTINUIERLICHEN HERSTELLUNG VON ETYHLEN-VINYLACETAT-COPOLYMER UND REAKTIONSSYSTEM
PROCEDE DE PRODUCTION EN CONTINU D'ACETATE D'ETHYLENE VINYLE ET SYSTEME DE REACTION

(43) Date of publication of application: 12.04.2006
(73) Proprietor: Chang Chun Petrochemical Co. Ltd., Tapei, Taiwan (TW)
(72) Inventor: TSAI, Jing-Jin, 104 Miaoli, Taiwan (CN); LIN, Li-Shing, 104 Miaoli, Taiwan (CN); CHANG, Huan-Ming, 104 Miaoli, Taiwan (CN); FAN, Kuang-Hui, 104 Miaoli, Taiwan (CN); LIN, Weng-Shing, 104 Miaoli, Taiwan (CN)
(74) Representative: Behnisch, Werner
(86) International application number: PCT/CN2003/000519
(87) International publication number: WO 2005/003197

(56) References cited:
- EP-A- 1 162 216
- DE-A1- 4 425 918
- GB-A- 2 363 125
- JP-A- 11 152 301
- SU-A1- 1 659 425
- US-B1- 6 245 851

## Description

### Field of the invention

The present invention relates to a process for continuously preparing ethylene-vinyl acetate co-polymer and also relates to a reactive system for continuously preparing ethylene-vinyl acetate co-polymer.

### Background of the invention

Since ethylene-vinyl alcohol copolymer possesses excellent gas barrier property, solvent-resistance, mechanical strength, and the like, it has been widely processed into film, sheet, container, fiber and used in various applications such as food package, chemical solvent package, wall paper, vehicle fuel tank.

Conventionally, the process for preparing ethylene-vinyl alcohol copolymer comprises subjecting ethylene and vinyl acetate as starting material to free radical solution polymerization in a solvent to form ethylene-vinyl acetate copolymer, and then hydrolyzing the resultant ethylene-vinyl acetate copolymer with a base to form ethylene-vinyl alcohol copolymer. In the conventional process, methanol is normally used as the solvent. Taking account of achieving a desire reaction rate and removing a large amount of heat generated during the polymerization reaction, the reaction temperature is normally set in a range of from 55 to 75°C . Furthermore, taking account of processing properties and gas barrier property of the copolymer, the reaction pressure is normally controlled in a range of from 25 to 60 kg/cm²G to achieve a suitable modifying degree of ethylene. During the polymerization process, a trans-esterification between vinyl acetate and methanol will occur, thus yield various impurities such as methyl acetate and acetaldehyde etc Such impurities will be accumulated in the reactive system with the recycling of un-reacted ethylene and vinyl acetate. The concentration of the impurities in the reactive system will be gradually increased while time passed. The accumulated impurities will result in the deterioration of ethylene-vinyl acetate copolymer quality. Thus if the deteriorated ethylene-vinyl acetate copolymer is further hydrolyzed, the quality of the resultant ethylene-vinyl alcohol copolymer will become deteriorating more and more. To improve the quality of ethylene-vinyl alcohol copolymer, in conventional process for producing ethylene-vinyl acetate copolymer, the impurities are usually removed from the reactive system by distillation during the recovery of ethylene and vinyl acetate. However, the conventional method for removing impurity could only inhibit the gradually increase of concentration of impurities in the system so that the concentration of impurities in the system can only be controlled in a certain range. It is impossible to remove the impurities completely. Due to the impurities remaining in the system, it will further graft on ethylene-vinyl acetate copolymer and cause negative influence on the copolymer quality, including lowered heat-resistance, product yellowing, hardly recovering of trimming during processing into article.

EP 1 162 216 describes methods for producing an ethylene-vinyl acetate copolymer and a saponified product thereof by using an alcohol-based solvent as a reaction solvent. The document is silent on how to decrease the impurity in a continuous production system for preparing ethylene-vinyl acetate copolymer into the polymerization system.

Based on the above disadvantages, the present inventors have conducted an investigation on the process for producing ethylene-vinyl alcohol copolymer and thus completed the present invention.

### Summary of the invention

An object of the present invention is to provide a process for continuously producing ethylene-vinyl acetate copolymer, which process can effectively remove impurities generated in the process. Therefore, when ethylene-vinyl alcohol (EVOH) copolymer is prepared by alkali hydrolyzing the ethylene-vinyl acetate copolymer, an article formed from the EVOH copolymer possesses improved color and heat-resistance.

Another object of the present invention is to provide a reactive system for continuously producing ethylene-vinyl acetate copolymer.

To achieve the above objects, the process for continuously producing ethylene-vinyl acetate copolymer of the present invention comprises the steps of: reacting ethylene and vinyl acetate in a polymerization tank to carry out a solution polymerization wherein the copolymerization pressure is controlled in a range of from 25-60 kg/cm²G, collecting reaction product in a recovery column, and recycling un-reacted ethylene into the polymerization system, which process is characterized by that a gaseous phase of the polymerization is connected to an impurity scrubbing column in which the impurity is washed with the solvent used in the polymerization, and the impurity-removed gaseous phase is recycled into the reactive system for subsequent reaction.

The reactive system for continuously producing ethylene-vinyl acetate copolymer of the present invention comprises:
a polymerization reaction tank for copolymerizing of ethylene and vinyl acetate;
a recovery column connected to the bottom of the polymerization tank;
a discharge line connected to the bottom of the recovery column;
the reactive system is characterized by that an impurity scrubbing column for removing impurity from the system is provided on the top of the polymerization tank; the scrubbing column is provided with (1) a scrubbing fluid feeding line for introducing scrubbing fluid into the column to remove the impurities contained therein; and (2) a scrubbing fluid recycling line for recycling the used scrubbing fluid into the impurity scrubbing column for next scrubbing.

The process for continuously producing ethylene-vinyl acetate copolymer of the present invention would continuously remove the generated impurities during the polymerization so that a stability of the reactive system for producing ethylene-vinyl acetate copolymer is increased.

Further, when the ethylene-vinyl acetate copolymer produced by the present process is further alkali hydrolyzed into ethylene-vinyl alcohol copolymer (EVOH), the resultant EVOH possesses excellent heat resistance.

### Brief Description of Drawing

Figure 1 is a schematic view showing the reactive system for continuously producing ethylene-vinyl acetate copolymer of the present invention, wherein
   1: Line for introducing vinyl acetate and methanol
   2: Polymerization tank
   3: Ethylene recovering column
   4: Line for discharging ethylene-vinyl acetate copolymer
   5: Heat exchanger
   6, 15: Lines for recycling the used methanol scrubbing fluid
   7, 16: Lines for introducing fresh methanol scrubbing fluid
   8: Compressor for recovering ethylene
   9, 17: Lines for recovering ethylene
   10: Line for discharging gaseous ethylene
   11: Impurity scrubbing column
   12: Tank for releasing methanol scrubbing fluid
   13: Line for recovering methanol scrubbing fluid
   14: Line for discharging waste gas
   18: Line for feeding ethylene
   19: Buffer tank for ethylene
   LI: Liquid level controller
   PI: Pressure controller
   FI: Flow rate controller

### Detailed Description of the Invention

In the process for continuously producing ethylene-vinyl acetate copolymer, monomers, ethylene and vinyl acetate, are copolymerized in a solvent such as methanol. Copolymerization temperature is normally in a range of from 55 to 75°C to optimize the reaction rate while releasing the large amount of heat generated in the copolymerization. Also, the copolymerization pressure is controlled in a range of from 25 to 60 kg/cm²G to maintain a modified ethylene at a suitable level. Such conditions are commonly used in current industrial process for producing ethylene-vinyl acetate copolymer. However, in the process for producing ethylene-vinyl acetate copolymer, the monomer vinyl acetate would trans-esterify with methanol to produce impurities such as methyl acetate, acetaldehyde, and the like. By continuously carrying out the polymerization, if such impurities would not be removed from the polymerization, they will be recycled into the reactive system for next reaction. Thus they will affect the property of EVOH product subsequently prepared.

The process for continuously producing ethylene-vinyl acetate copolymer of the present invention mainly use the fact that such impurities will vaporize into gaseous phase due to their low boiling point property. Thus, the technical feature of the process according to the present invention is to introduce the gaseous phase into an impurity scrubbing column and wash the gaseous phase with methanol to remove impurity from the un-reacted ethylene, and then recycle the impurity-removed ethylene into the reactive system for next reaction as a starting monomer.

The reactive system for continuously producing ethylene-vinyl acetate copolymer of the present invention mainly comprises a polymerization tank, an ethylene recovering column, and an impurity scrubbing column, wherein the ethylene recovering column is connected with the bottom of the polymerization tank for receiving the un-reacted ethylene and resultant copolymer discharged from the tank, and the impurity scrubbing column is connected to the top of the polymerization tank for collecting the gaseous phase discharged from the tank.

Now the reactive system for continuously producing ethylene-vinyl acetate copolymer of the present invention is further illustrated by reference to the accompanied drawing, such as Figure 1. Please refer to Figure 1. In Figure 1, a polymerization tank 2 is connected with a line 1 for introducing vinyl acetate and methanol and with a line 18 for feeding ethylene. An ethylene recovering column 3 is connected to the bottom of the polymerization tank 2 via a line. A line 7 for introducing fresh methanol scrubbing fluid is connected to the top of the ethylene recovering column 3 and a line 4 for discharging ethylene-vinyl acetate copolymer is connected to the bottom of the column 3. In the column 3, the resultant ethylene-vinyl acetate copolymer is washed with methanol and discharged from the column 3 via the line 4. A line 6 for recycling used methanol scrubbing fluid is connected to the middle section of the column 3 to recycle the used methanol into the column 3 for reusing. Each heat exchanger 5 is provided in the path of each line 6 and line 7 so that the recycled methanol could be cooled down. A line 9 for recovering ethylene is connected to the top of the column 3 to recycle the un-reacted ethylene back to polymerization tank 2 for next polymerization. In the path of the line 9, a buffer tank 19 for ethylene and a compressor 8 for recovering ethylene are provided. The compressor 8 is used for driving the recycled ethylene back to the polymerization tank 2. In the polymerization tank 2, a liquid level controller LI is provided at a suitable position for controlling a valve positioned at the bottom of the tank 2 to discharge the reactants and/or product into the recovering column 3 if the liquid level of the reaction exceeds a predetermined level. In the path of line 9 for discharging gaseous ethylene which is connected to the top of the column 3, a pressure controller PI is provided to adjust the pressure of the recycled ethylene. The above mentioned configuration is the reactive system commonly used in the process for continuously producing ethylene-vinyl acetate copolymer.

According to the reactive system for continuously producing ethylene-vinyl acetate copolymer of the present invention, in addition to the above configuration, an impurity scrubbing column 11 is connected to the top of the polymerization tank 2 via a line 10. The line 10 is used for introducing the gaseous phase occupied in the upper tank 2 into the impurity scrubbing column 11. The gaseous phase mainly consists of un-reacted ethylene gas, low boiling impurities such methyl acetate and acetaldehyde. A line 16 for introducing fresh methanol scrubbing fluid is provided at the upper position of the impurity scrubbing column 11 to wash the gaseous phase and separate the impurities from ethylene. Then the impurity- removed ethylene gas is recycled into the polymerization tank 2 and reused via a line 17 for recovering ethylene provided at the top of the impurity scrubbing column 11. Similar to the line 9 for recovering ethylene, in the path of the line 17, a buffer tank 19 for ethylene and a compressor 8 for recovering ethylene are provided. The compressor 8 is used for driving the recycled ethylene back to the polymerization tank 2. A line 15 for recycling the used methanol scrubbing fluid is provided at the bottom of the impurity scrubbing column 11 so that the used methanol in the impurity scrubbing column 11 could be reused. Similar to lines 6 and 7, each heat exchanger 5 is provided in the path of each line 15 and line 16 so that the recycled methanol could be cooled down. In the impurity scrubbing column 11, a liquid level controller LI is provided at a suitable position for controlling a valve positioned at the bottom of the column 11 to discharge the methanol scrubbing fluid into a tank 12 for releasing methanol scrubbing fluid if the liquid level in the column 11 exceeds a predetermined level. The tank 12 for releasing methanol scrubbing fluid could discharge waste gas via a line 14 and recovery fluid via a line 13.

According to the reactive system of the present invention, since low boiling impurities generated in the polymerization are almost removed from the gaseous phase by using the impurity scrubbing column, the concentration of the impurities in the reactive system could be reduced to the level of almost zero. In the process for continuously producing ethylene-vinyl acetate copolymer of the present invention, the impurity scrubbing column is worked as follows.
1. Vinyl acetate and ethylene are dissolved in methanol in the polymerization tank 2 to carry out copolymerization. During the copolymerization, vinyl acetate is decomposed to yield low boiling impurities.
2. Due to saturated vapor pressure in the tank, such generated impurities would evaporate into the gaseous phase together with un-reacted ethylene.
3. By using flow rate controller FI (not shown in the Figure 1), a predetermined amount of the gaseous phase is introduced into the impurity scrubbing column 11 from the tank 2, and washed with methanol as rinsing fluid to wash out the impurities contained in the gas.
4. The impurity-removed ethylene gas is re-compressed by compressor 8 and recycled into the tank 2 for reusing.
5. The impurity scrubbing column 11 is a packing column, in which a fresh methanol is injected at top of the column as a rinsing fluid and a pump is provided at the bottom of the column for recycling the used methanol into the column for next washing. For increasing the washing efficiency, the used methanol is further cooled down by a heat exchanger 5 before re-charging into the column 11.

The present invention is illustrated by reference to the following Examples and Comparative examples.

In the following Examples and Comparative Examples, the physical property and processing property of an ethylene-vinyl alcohol copolymer, which is produced from the ethylene-vinyl acetate copolymer prepared by the process of the present invention, are determined by the following methods.
A. Melt Flow Index (MFI) (grams/10 minutes): An ethylene-vinyl alcohol copolymer was determined its MFI according to the method JIS K7210 at test temperatures of 190 °C, 210°C, and 230°C, respectively, and a loading of 2160 grams by using Dynisco polymer tester (manufactured by Fu You Industries. Co.). MFI is an indicative of flowability for ethylene-vinyl alcohol copolymer in processing. The more the MFI value, the less the molecular weight.
B. Heat resistance test: EVOH pellets were weighted and placed into a PTFE (polytetrafluoroethylene) disk having 10cm length x 10cm width. The disk was placed in an oven at a temperature of 230°C. After 5, 10, and 20 minutes, respectively, the disk was taken from the oven and stood to cool down. The EVOH pellets were determined its yellowing level according to the method of ASTM D1925 by using color measuring instrument (Model SP 68 Spectrophotomer manufactured by X-Rite Inc.). The yellowing level is expressed as YI (Yellowing Index). The more the YI value the more the yellowing level, i.e. the poorer the heat-resistance. The less the YI value, the less the yellowing level. Therefore, the less YI value indicates that the product exhibit a better heat resistance.

### Example 1

This example used the reactive system for continuously producing ethylene-vinyl acetate copolymer, as shown in Figure 1. The volume of the tank 2 is 100 liters, L/D=1.27, equipped with a stirrer and a jacket for cooling, and has a resistance to pressure of up to 200 kg/cm²G. The copolymerization conditions were as follows.

| | |
|---|---|
| Vinyl acetate feed rate | 7.6 kg/hr |
| Methanol feed rate | 0.23 kg/hr |
| 2,2'-Azodiisobutylnitrile | 2.3g /hr. |
| Copolymerization temperature | 60°C |
| Ethylene pressure in the tank | 43 kg/cm²G |
| Average retention time | 6 hrs |

The conditions in the impurity scrubbing column are as follows.

| | |
|---|---|
| Fresh methanol feed rate | 0.5 kg/hr |
| (At the top of the impurity scrubbing column) | |
| Used methanol recycling rate | 20L/hr |
| (At the bottom of the impurity scrubbing column) | |

After the gaseous phase in the tank passed through the impurity scrubbing column, a discharge from the bottom of the impurity scrubbing column was determined its composition, which is shown as follows. A temperature of the discharge is at 10°C.

| | |
|---|---|
| Methanol | 60.6 wt% |
| Vinyl acetate | 24.3 wt% |
| Ethylene | 14.9 wt% |
| Acetaldehyde | 0.2 wt% |
| Methyl acetate | 0.336 wt% |

After copolymerization, the resultant product was discharged from the bottom of the polymerization tank and determined its composition, which is shown as follows.

| | |
|---|---|
| EVAc (ethylene modifying degree: 32 mole %) | 32.2 wt% |
| Methanol | 2.5 wt% |
| Vinyl acetate | 54.7 wt% |
| Ethylene | 10.7 wt% |

The above resultant product was subjected to vaporization to steam off the ethylene contained therein. Then the un-reacted vinyl acetate was distilled off by using distillation column as follows. The ethylene-removed product was charged into the top of the distillation column and a gaseous methanol was purged into the column at its bottom. By using the azeotrpoic property of methanol with vinyl acetate under ambient pressure, the un-reacted vinyl acetate was removed from the product along with methanol. From the bottom of the distillation column a methanolic solution of EVAc was collected, which has a solid content of 42 wt%. The methanolic solution of EVAc was analyzed by Gas Chromatography and found an ethylene content of less than 100 ppm.

Subsequently, the methanolic solution of EVAc was hydrolyzed with a base to obtain a solution of ethylene-vinyl alcohol copolymer (EVOH) in methanol. The methanolic solution of EVAc was charged into top of a separate reactive distillation column. An alkali catalyst sodium hydroxide was diluted with methanol to a concentration of 2.5 wt%, the resultant catalyst solution was divided into three parts and injected into the reactive distillation column at three different positions. The normality of sodium hydroxide was 0.025N. During the hydrolysis, a gaseous methanol was purged into the reactive distillation column at the bottom to carry out the by-product methyl acetate generated during the hydrolysis reaction. In the reactive distillation column, a pressure was maintained as 3 kg/cm²G and an overhead temperature was 106°C. For the resultant methanolic solution of ethylene-vinyl alcohol copolymer its solid content was determined at the bottom of the column 11 and found as 26.5 wt%. For the methanolic solution of ethylene-vinyl alcohol copolymer was determined its alkalization degree of 99.6 mole% by a titration method.

After releasing the pressure, high temperature steam was charged into the column to vaporize methanol and carry it out from the column. At this moment, the solid content of the product was increased to be 37.5% and the solvent for the solution containing EVOH is a mixture of methanol/ water= 70/30. The resultant solution containing EVOH was extruded into strands having a diameter of 3.5 mm through an extruder. The strands were passed through a condensing and depositing tank and maintained for 60 seconds to deposit as solids. Then the solidified strands were cut into pellets having uniform length by using a cutter. The solvent contained in the condensing and depositing tank was a mixture of methanol/water= 10/90 and the temperature was 0~5°C.

The EVOH pellets were washed four times with purified water each time using water in an amount of 2 times of the wet weight of the EVOH pellets. Then the EVOH pellets were immersed in an aqueous acetic acid solution for 30 minutes and dehydrated by centrifuging and then dried in an oven at a temperature of 105°C for 24 hours to obtain EVOH product. The MFI value and heat resistance of the product were tested according to the methods mentioned above. The results are shown in Table 1.

### Comparative Example 1

Ethylene-vinyl acetate copolymer (EVAc) was prepared by following the procedures in Example 1 except for using the reactive system without the impurity scrubbing column of the present invention. The resultant EVAc was hydrolyzed with sodium hydroxide similar to Example 1 to produce EVOH.

The prepared EVOH was tested its MFI value and heat resistance according to the methods mentioned above. The results are shown in Table 1.

**Table 1 Results of MFI test and heat resistance test**

| | MFI(g/10 mins.) | | | YI(230°C) | | |
|---|---|---|---|---|---|---|
| | (Loading 2160 g) | | | | | |
| | 190°C | 210°C | 230°C | 5 mins | 10 mins | 20 mins |
| Example 1 | 1.52 | 3.24 | 6.45 | 11.2 | 11.4 | 11.5 |
| Comparative Example 1 | 1.75 | 4.15 | 8.34 | 16.1 | 16.5 | 17.4 |

From the data shown in Table 1, it is known that the EVOH produced from the EVAc prepared according to the reactive system of the present invention exhibits a lower MFI value and has an improved heat resistance and whiteness due to its lower YI (Yellowing Index) value.

### Example 2

This example used a reactive system as used in Example 1 except for changing the conditions as follows.

The copolymerization conditions were as follows.

| | |
|---|---|
| Vinyl acetate feed rate | 6.1 kg/hr |
| Methanol feed rate | 0.31 kg/hr |
| 2,2'-Azodiisobutylnitrile | 0.183g /hr |
| Copolymerization temperature | 70°C |
| Ethylene pressure in the tank | 55 kg/cm²G |
| Average retention time | 6 hrs |

The conditions in the impurity scrubbing column are as follows.

| | |
|---|---|
| Fresh methanol feed rate | 0.6 kg/hr |
| (At the top of the impurity scrubbing column) | |
| Used methanol recycling rate | 35L/hr |
| (At the bottom of the impurity scrubbing column) | |

After the gaseous phase in the tank passed through the impurity scrubbing column, a discharge from the bottom of the impurity scrubbing column was determined its composition, which is shown as follows. A temperature of the discharge is at 15°C.

| | |
|---|---|
| Methanol | 63.1 wt% |
| Vinyl acetate | 20.3 wt% |
| Ethylene | 16.2 wt% |
| Acetaldehyde | 0.36 wt% |
| Methyl acetate | 0.55 wt% |

After copolymerization, the resultant product was discharged from the bottom of the polymerization tank and determined its composition, which is shown as follows.

| | |
|---|---|
| EVAc (ethylene modifying degree 44 mole%) | 39.9 wt% |
| Methanol | 3.78 wt% |
| Vinyl acetate | 43.8 wt% |
| Ethylene | 12.4 wt% |

The above resultant product was subjected to vaporization to steam off the ethylene contained therein. Then the un-reacted vinyl acetate was distilled off by using distillation column as follows. The ethylene-removed product was charged into the top of the distillation column and a gaseous methanol was purged into the column at its bottom. By using the azeotropic property of methanol with vinyl acetate under ambient pressure, the un-reacted vinyl acetate was removed from the product along with methanol. From the bottom of the distillation column a methanolic solution of EVAc was collected, which has a solid content of 43.8 wt%. The methanolic solution of EVAc was analyzed by Gas Chromatography and found an ethylene content of less than 100 ppm.

Similar to the Example 1 to subject to the hydrolysis of EVAc, the resultant methanolic solution of ethylene-vinyl alcohol copolymer at the bottom of the column was determined its solid content and found as 29.3 wt% and its alkalization degree was determined as 99.6 mole%.

After releasing the pressure, high temperature steam was charged into the column to vaporize methanol and carry it out from the column. At this moment, the solid content of the product was increased to be 37.84% and the solvent for the solution containing EVOH is a mixture of methanol/ water= 87/13. The resultant solution containing EVOH was extruded, cut to obtain pellets having uniform length as Example 1. The solvent contained in the condensing and depositing tank was a mixture of methanol/water= 15/85 and the temperature was 0~55°C.

The deposited EVOH pellets were subjected to water washing, acid treatment, and drying similar to Example 1, and then tested its MFI value and heat resistance according to the methods mentioned above. The results are shown in Table 2.

### Comparative Example 2

Ethylene-vinyl acetate copolymer (EVAc) was prepared by following the procedures in Example 2 except for using the reactive system without the impurity scrubbing column of the present invention. The resultant EVAc was hydrolyzed with sodium hydroxide similar to Example 1 to produce EVOH.

The prepared EVOH was tested its MFI value and heat resistance according to the methods mentioned above. The results are shown in Table 2.

**Table 2 Results of MFI test and heat resistance test**

| | RFI(g/10 mins.) | | | YI(230°C) | | |
|---|---|---|---|---|---|---|
| | (Loading 2160 g) | | | | | |
| | 190°C | 210°C | 230°C | 5 mins | 10 mins | 20 mins |
| Example 2 | 3.60 | 7.54 | 15.78 | 9.28 | 9.35 | 9.34 |
| Comparative Example 2 | 4.25 | 8.78 | 15.82 | 11.5 | 13.58 | 15.7 |

From the data shown in Table 2, it is known that the EVOH produced from the EVAc prepared according to the reactive system of the present invention exhibits a lower MFI value and has an improved heat resistance and whiteness due to its lower YI (Yellowing Index) value.

## Claims

1. A process for continuously producing ethylene-vinyl acetate copolymer, which comprises the steps of: reacting ethylene and vinyl acetate in a polymerization tank to carry out a solution polymerization wherein the copolymerization pressure is controlled in a range of from 25-60 kg/cm²G, collecting reaction product in a recovery column and recycling un-reacted ethylene into polymerization system, which process is **characterized by** that a gaseous phase of the polymerization is connected to an impurity scrubbing column in which the impurity is washed with the solvent used in the polymerization, and the impurity-removed gaseous phase is recycled into the reactive system for subsequent reaction.

2. The process according to claim 1, wherein the solvent used in the polymerization is methanol.

3. The process according to claim 1, wherein the impurities are low boiling impurities.

4. The process according to claim 3, wherein the low boiling impurities are methyl acetate and/or acetaldehyde.

5. The process according to claim 1, wherein the product ethylene-vinyl acetate is further hydrolyzed with a base to produce ethylene-vinyl alcohol copolymer.

6. A reactive system for continuously producing ethylene-vinyl acetate copolymer of the present invention comprises:
a polymerization reaction tank for copolymerizing of ethylene and vinyl acetate;
a recovery column connected to the bottom of the polymerization tank;
a discharge line connected to the bottom of the recovery column; the reactive system is **characterized by** that an impurity scrubbing column for removing impurity from the system is provided on top of the polymerization tank; the scrubbing column is provided with (1) a scrubbing fluid feeding line for introducing scrubbing fluid into the column and removing impurity contained therein; and (2) a scrubbing fluid recycling line for recycling the used scrubbing fluid into the impurity scrubbing column for next scrubbing.

7. The reactive system according to claim 6, wherein the scrubbing fluid feeding line and the scrubbing fluid recycling line are each provided with a heat exchanger before connecting to the impurity scrubbing column, for cooling the solvent before introducing into the impurity scrubbing column.

8. The reactive system according to claim 6, wherein the washing solvent is methanol.

## Patentansprüche

1. Verfahren zum kontinuierlichen Herstellen von Ethylen-Vinylacetat-Copolymer, umfassend die Schritte:
Umsetzen von Ethylen und Vinylacetat in einem Polymerisationsgefäß zum Ausführen einer Lösungspolymerisation, wobei der Copolymerisationsdruck zwischen 25 und 60 kg/cm²G geregelt wird, Sammeln des Reaktionsprodukts in einer Rückgewinnungssäule und Rückführen des nicht-umgesetzten Ethylens in das Polymerisationssystem,
wobei das Verfahren **dadurch gekennzeichnet ist, dass** eine Gasphase der Polymerisation mit einer Verunreinigungen herauswaschenden Säule verbunden ist, in der die Verunreinigungen mit dem bei der Polymerisation verwendeten Lösungsmittel herausgewaschen werden, und die von Verunreinigungen befreite Gasphase zur nachfolgenden Umsetzung in das Reaktionssystem rückgeführt wird.

2. Verfahren nach Anspruch 1, wobei das bei der Polymerisation verwendete Lösungsmittel Methanol ist.

3. Verfahren nach Anspruch 1, wobei die Verunreinigungen leichtsiedende Verunreinigungen sind.

4. Verfahren nach Anspruch 3, wobei die leichtsiedenden Verunreinigungen Methylacetat und/oder Acetaldehyd sind.

5. Verfahren nach Anspruch 1, wobei das Ethylen-Vinylacetat-Produkt weiter mit einer Base hydrolysiert wird, um Ethylen-Vinylalkohol-Copolymer zu erzeugen.

6. Reaktionssystem zum kontinuierlichen Herstellen von Ethylen-Vinylacetat-Copolymer gemäß der vorliegenden Erfindung, umfassend:
ein Polymerisationsreaktionsgefäß zum Copolymerisieren von Ethylen und Vinylacetat;
eine Rückgewinnungssäule, die mit dem Boden des Polymerisationsgefäßes verbunden ist;
eine Ableitung, die mit dem Boden der Rückgewinnungssäule verbunden ist;
wobei das Reaktionssystem **dadurch gekennzeichnet ist, dass** eine Verunreinigungen herauswaschende Säule zum Entfernen von Verunreinigungen aus dem System am Kopf des Polymerisationsgefäßes vorgesehen ist; die Waschsäule mit (1) einer Waschfluid-Zuleitung zum Einleiten von Waschfluid in die Säule und Entfernen der darin enthaltenen Verunreinigungen und (2) einer Waschfluid-Rückführungsleitung zum Rückführen des gebrauchten Waschfluids für den nächsten Waschvorgang in die Verunreinigungen herauswaschende Säule versehen ist.

7. Reaktionssystem nach Anspruch 6, wobei die Waschfluid-Zuleitung und die Waschfluid-Rückführungsleitung, bevor sie mit der Verunreinigungen herauswaschenden Säule verbunden werden, jeweils mit einem Wärmetauscher versehen werden, um das Lösungsmittel vor Einleiten in die Verunreinigungen herauswaschende Säule zu kühlen.

8. Reaktionssystem nach Anspruch 6, wobei das Lösungsmittel zum Waschen Methanol ist.

## Revendications

1. Procédé pour produire de façon continue un copolymère d'éthylène - acétate de vinyle, qui comprend les étapes de :
faire réagir de l'éthylène et de l'acétate de vinyle dans un réservoir de polymérisation pour effectuer une polymérisation de solution dans laquelle la pression de copolymérisation est controlée dans une plage comprise entre 25 et 60 kg/cm²G,
recolter le produit de réaction dans une colonne de récupération et recycler l'éthylène n'ayant pas réagi dans le système de polymérisation, lequel procédé est **caractérisé en ce qu'**une phase gazeuse de la polymérisation est connectée à une colonne de nettoyage d'impuretés dans laquelle l'impureté est lavée avec le solvant utilisé dans la polymérisation, et la phase gazeuse sans impureté est recyclée dans le système réactif pour la réaction suivante.

2. Procédé selon la revendication 1, dans lequel le solvant utilisé dans la polymérisation est du méthanol.

3. Procédé selon la revendication 1, dans lequel les impuretés sont des impuretés à point d'ébullition bas.

4. Procédé selon la revendication 3, dans lequel les impuretés à point d'ébullition bas sont de l'acétate de méthyle et/ou de l'acétaldéhyde.

5. Procédé selon la revendication 1, dans lequel le produit éthylène - acétate de vinyle est en outre hydrolysé avec une base pour produire un copolymère d'éthylène - alcool vinylique.

6. Système réactif pour produire de façon continue du copolymère d'éthylène - acétate de vinyle de la présente invention comprenant :
un réservoir de réaction de polymérisation pour copolymériser l'éthylène et l'acétate de vinyle ;
une colonne de récupération connectée au fond du réservoir de polymérisation ;
une conduite de décharge connectée au fond de la colonne de récupération ;
le système réactif est **caractérisé en ce qu'**une colonne de nettoyage d'impureté pour enlever l'impureté du système est disposée sur le dessus du réservoir de polymérisation ; la colonne de nettoyage est munie (1) d'une conduite d'alimentation de fluide de nettoyage pour introduire du fluide de nettoyage dans la colonne et pour enlever l'impureté contenue en son sein ; et (2) d'une conduite de recyclage de fluide de nettoyage pour recycler le fluide de nettoyage utilisé dans la colonne de nettoyage d'impuretés pour le nettoyage suivant.

7. Système réactif selon la revendication 6, dans lequel la conduite d'alimentation de fluide de nettoyage et la conduite de recyclage de fluide de nettoyage sont chacune munies d'un échangeur thermique avant la connexion à la colonne de nettoyage d'impuretés, pour refroidir le solvant avant de l'introduire dans la colonne de nettoyage d'impuretés.

8. Système réactif selon la revendication 6, dans lequel le solvant de lavage est du méthanol.
